# EUROPÄISCHE PATENTSCHRIFT

(11) **EP 1 193 122 B1**
(45) Veröffentlichungstag und Bekanntmachung des Hinweises auf die Patenterteilung: **25.06.2003**
(21) Anmeldenummer: 00120636.6
(22) Anmeldetag: 21.09.2000
(51) Int. Cl.: B60P 1/44

(54) **Steuerung für eine Hubladebühne**
Control system for a loading tailgate
Système de commande pour un hayon élévateur

(43) Veröffentlichungstag der Anmeldung: 03.04.2002
(73) Patentinhaber: Bär, Gerd, 74078 Heilbronn (DE)
(72) Erfinder: Bär, Gerd, 74078 Heilbronn (DE)
(74) Vertreter: KOHLER SCHMID + PARTNER

(56) Entgegenhaltungen:
- EP-A- 0 773 136
- EP-A- 1 036 699
- DE-A- 3 345 589
- PATENT ABSTRACTS OF JAPAN vol. 014, no. 367 (M-1008), 9. August 1990 (1990-08-09) & JP 02 133252 A (KYOKUTO KAIHATSU KOGYO CO LTD), 22. Mai 1990 (1990-05-22)

## Beschreibung

Die Erfindung betrifft eine Steuerung für eine Hubladebühne mit parallelogrammförmigem Hubwerk, mit vier Steuerfunktionen zum Öffnen der Plattform der Hubladebühne aus einer vertikalen Fahrtstellung in eine waagerechte Position, zum Heben und Senken der waagerechten Plattform sowie zum Schließen der Plattform aus ihrer waagerechten Position in die vertikale Fahrtstellung.

Hubladebühnen, bei denen die Plattform in ihrer Fahrtstellung hinter dem Aufbau hochsteht, haben aus Unfallverhütungsgründen eine Zweihandsteuerung. Die Funktion "Öffnen+Senken" bzw. "Heben+Schließen" der Plattform muß mit beiden Händen an einer Bedieneinheit die jeweilige Funktion ausgelöst werden. Um die Plattform in ihre höhenverfahrbare Stellung zu bringen, wird sie nacheinander in eine horizontale Lage geöffnet und dann auf den Boden bzw. auf Bodennähe abgesenkt. Dabei müssen aus Sicherheitsgründen vorgeschriebene Geschwindigkeiten eingehalten werden, so daß sich die Zeit der Inbetriebnahme der Hubladebühne aus der Addition der Funktionen ergibt. Für den Öffnungsvorgang sind mindestens 10 Sekunden vorgeschrieben.

Bedieneinheiten mit folgenden Steuerelementen sind bekannt:
- 3 Drehschalter;
- 2 Drehschalter und 1 Druckschalter;
- 5 Druckschalter;
- 4 Druckschalter und 1 Kreuzhebelschalter;
- 2 Kreuzhebelschalter;
- 1 Kreuzhebelschalter und 1 Drehschalter.

Durch die zeitliche Hintereinanderschaltung der Funktion "Öffnen" und "Senken" beim Inbetriebsetzen der Plattform ergibt sich eine feste Zeit, die sich je nach Hubhöhe, d.h. nach Ladebodenhöhe des Fahrzeugs richtet. Die durchschnittliche Öffnungszeit beträgt etwa 12 Sekunden und die durchschnittliche Senkzeit etwa 14 Sekunden. Aufgrund der oben genannten Vorschriften muß sichergestellt sein, daß beide Hände für die Schaltung benutzt werden und daß im Arbeitslastspiel eine eindeutige Bedienfunktion gegeben sein muß, d.h., die Schaltfunktionen dürfen nicht wechseln (eindeutige Zuordnung).

Es ist daher die Aufgabe der Erfindung, bei einer Steuerung für eine Hubladebühne der eingangs genannten Art die bis zum Inbetriebsetzen der Plattform erforderliche Zeit zu verkürzen.

Diese Aufgabe wird erfindungsgemäß gelöst gekennzeichnet durch eine fünfte Steuerfunktion zum gleichzeitigen Öffnen/Senken der Plattform aus der etwa vertikalen Fahrtposition in eine waagerechte Arbeitsposition, wobei die fünfte Steuerfunktion spätestens mit Erreichen der waagerechten Arbeitsposition der Plattform deaktiviert ist.

Eine Verkürzung der Inbetriebsetzung ist dadurch möglich, daß die Funktionen 'Öffnen' und 'Senken' gleichzeitig erfolgen. Dies ist hydraulisch auch einfach zu lösen, da die Funktion 'Senken' durch Schwerkraft erfolgt und keine Arbeit hierfür erforderlich ist. Durch die erfindungsgemäße Steuerung kann, wenn die kombinierte fünfte Steuerfunktion frühzeitig beim Öffnen betätigt wird, ein Großteil der Senkzeit von ca. 12 Sekunden eingespart werden. Dies sind im Verteilerverkehr bei 50 Öffnungen am Tag immerhin 600 Sekunden, also 10 Minuten.

Bei besonders bevorzugten Ausführungsformen der Erfindung ist die fünfte Steuerfunktion nur bis zu einem Öffnungsgrenzwinkel der Plattform von ca. 45°, vorzugsweise ca. 20°, bezogen auf die vertikale Fahrtstellung, aktivierbar ist.

Bei Öffnungswinkeln der Plattform größer als der Öffnungsgrenzwinkel kann die aktivierte fünfte Steuerfunktion durch einen Abbruch oder eine Unterbrechung der fünften Steuerfunktion durch den Bediener deaktiviert werden oder bei Erreichen der waagerechten Arbeitsposition der Plattform automatisch in die Steuerfunktion "Senken" übergehen. Im letzteren Fall muß über einen Sensor die waagerechte Arbeitsposition der Plattform erfaßt und ein entsprechendes Signal an die Steuerung abgegeben werden.

Bevorzugt ist bis zum Öffnungsgrenzwinkel die fünfte Steuerfunktion durch Betätigen der Steuerfunktion "Senken" auslösbar, so daß für die fünfte Steuerfunktion an der Bedieneinheit kein separater Hebel oder Schalter erforderlich ist.

Zum Erfassen zumindest des Öffnungsgrenzwinkels der Plattform ist vorzugsweise ein entsprechender Sensor vorgesehen, z.B. ein Neigungssensor an der Plattform. Üblicherweise ist an einer Plattform bereits ein Neigungssensor vorhanden, über den bei einem Öffnungswinkel der Plattform von ca. 20° die Warnblinkleuchten der Plattform aktiviert werden. Das Signal dieses Neigungssensors kann vorteilhaft zum Erfassen des Öffnungsgrenzwinkels genutzt werden.

Vorzugsweise sind alle Steuerfunktionen der Steuerung mittels einer Zweihandbedieneinheit mit zwei oder drei Befehlsgeräten mit je zwei Steuerfunktionen auslösbar.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: in einer Seitenansicht die Plattform einer Hubladebühne in ihrer geschlossenen Fahrtstellung hinter dem Aufbau eines Fahrzeugs sowie gestrichelt die Öffnungsstellung der Plattform, bis die fünfte Steuerfunktion zum gleichzeitigen Öffnen/Senken der Plattform aus der vertikalen Fahrtposition in einewaagerechte Arbeitsposition ausgelöst werden kann;
- Fig. 2: die Plattform der Fig. 1 in einer Zwischenposition beim gleichzeitigen Öffnen/Senken, wobei gestrichelt die waagerechte Endposition des gleichzeitiges Öffnen/Senken der Plattform und die Bodenstellung der Plattform dargestellt sind;
- Fig. 3: schematisch die fünf verschiedenen Steuerfunktionen der Plattform und die zugehörigen Steuerstellungen eines Zweihandbediengeräts; und
- Fig. 4: den elektrischen Schaltplan einer beispielhaften Realisierung der erfindungsgemäßen Steuerung mit Relais.

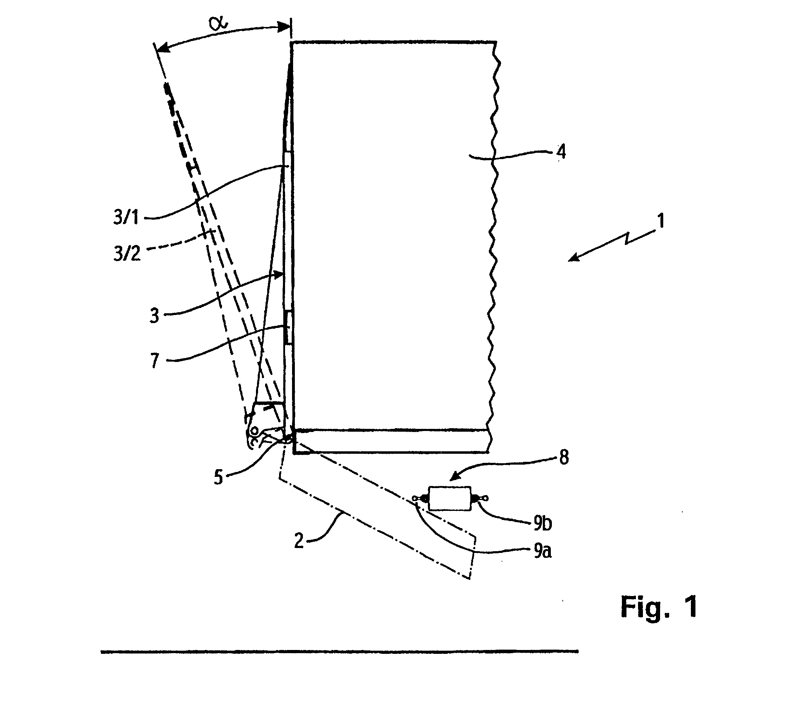

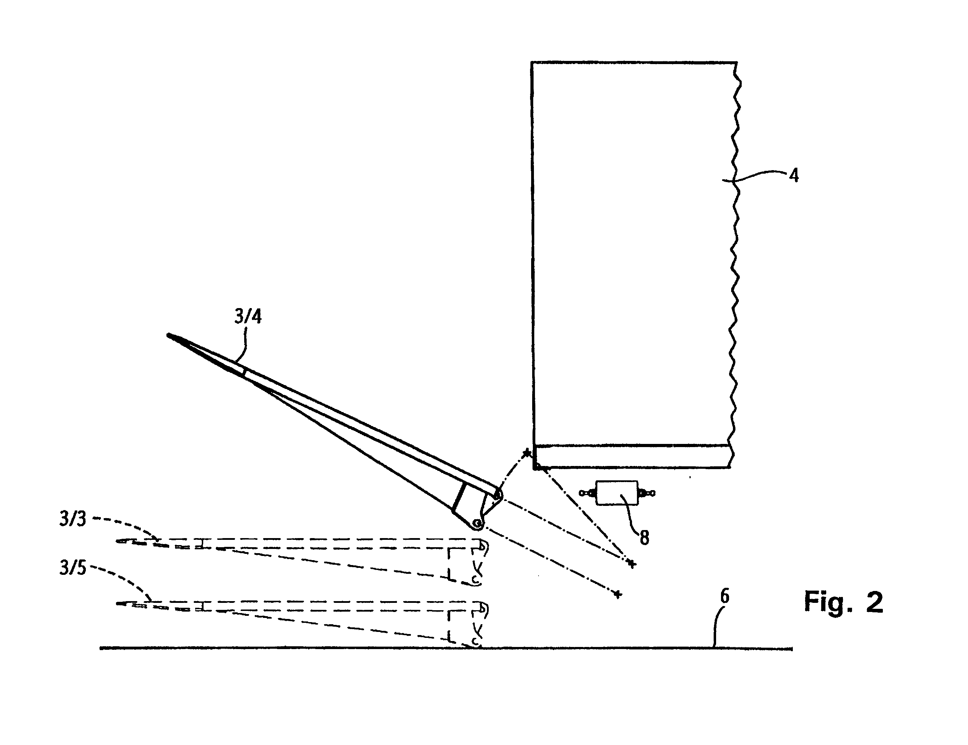

**Fig. 1** zeigt schematisch eine Hubladebühne **1** mit parallelogrammförmigem Hubwerk **2** zum Verfahren der Plattform **3** der Hubladebühne 1, wobei die Plattform 3 in Fig. 1 in ihrer vertikalen Fahrtposition **3/1** hinter dem Aufbau **4** des Fahrzeugs gezeigt ist. Beim Öffnen der Plattform 3 aus der Fahrtposition 3/1 in eine waagerechte Arbeitsposition dreht sich die Plattform 3 um den Drehpunkt 5 des Hubwerks 2. Gestrichelt dargestellt ist in Fig. 1 die bis zu einem Öffnungsgrenzwinkel α geöffnete Plattform **3/2.** Nur bis zu diesem auf die vertikale Fahrtstellung 3/1 bezogenen Öffnungsgrenzwinkel α kann die Plattform gleichzeitig geöffnet und gesenkt werden (Kombinationsfunktion), bis die in Fig. 2 gestrichelt gezeigte waagerechte Arbeitsposition **3/3** erreicht ist. Der Öffnungsgrenzwinkel α beträgt im Ausführungsbeispiel ca. 20°.

**Fig. 2** zeigt die Plattform in einer Zwischenposition **3/4** beim gleichzeitigen Öffnen/Senken. Sobald die waagerechte Arbeitsposition 3/3 erreicht ist, ist die Kombinationsfunktion aufgehoben und die Plattform 3 kann z.B. angehoben oder auf den Boden **6** (Position **3/5**) abgesenkt werden. Das Abneigen der Plattform am Boden ist nicht dargestellt. Wird die Kombinationsfunktion bei Öffnungswinkeln größer als der Öffnungsgrenzwinkel α ab- bzw. unterbrochen, also z.B. in der Zwischenposition 3/4, wird die Kombinationsfunktion aufgehoben, und die Plattform kann entweder nur um den Drehpunkt 5 geöffnet oder nur abgesenkt werden.

Zum Erfassen des Öffnungsgrenzwinkels α dient ein an der Plattform 3 vorhandener Neigungssensor in Form eines Neigungsschalters **7**, der auch zum Anschalten der an der Plattform vorgesehenen Warnblinkleuchten beim Öffnungsgrenzwinkel α genutzt wird. Der Bewegungsablauf des Hubwerks 2 bzw. der Plattform 3 wird mit einer Zweihandbedieneinheit 8 mit zwei Steuerhebeln **9a, 9b** gesteuert.

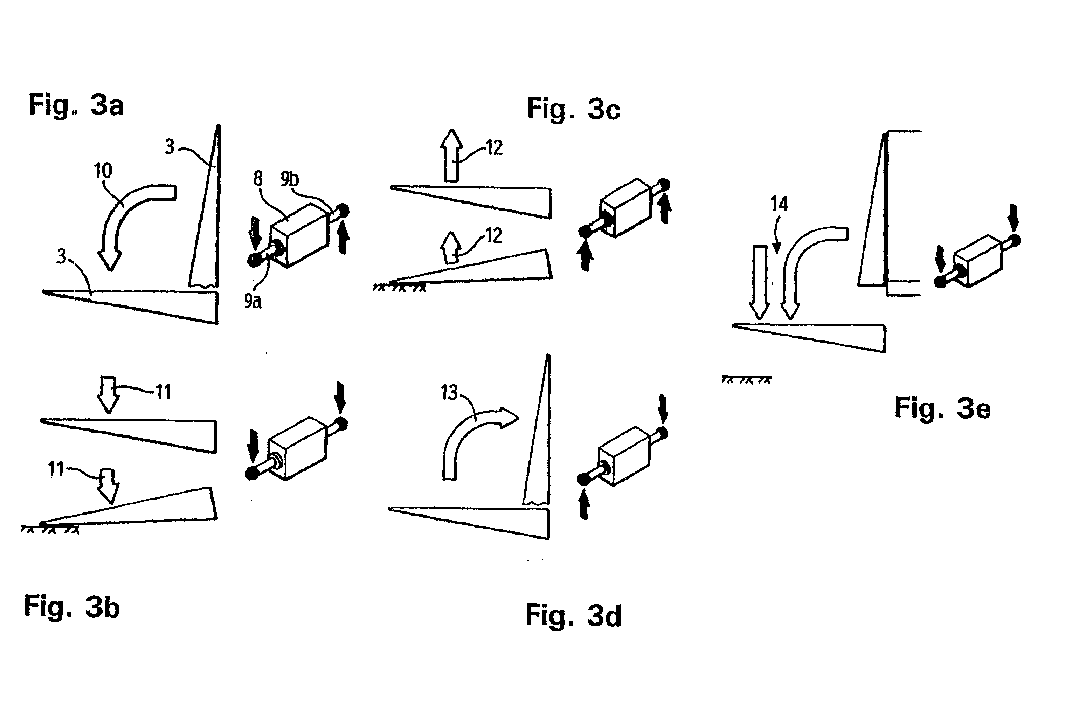

In **Fig. 3** sind die verschiedenen Steuerfunktionen der Zweihandbedieneinheit dargestellt. Für die in **Fig. 3a** gezeigte Steuerfunktion "Öffnen" **10** der Plattform 3 ist der Steuerhebel 9a nach unten und der Steuerhebel 9b nach oben zu betätigen. Für die in **Fig. 3b** gezeigte Steuerfunktion "Senken" bzw. "Abneigen" **11** sind beide Steuerhebel 9a, 9b nach unten zu betätigen. Um die waagerechte Plattform zu heben oder die abgeneigte Plattform wieder in die waagerechte Arbeitsposition zu bringen (**Fig. 3c**), werden beide Steuerhebel 9a, 9b nach oben betätigt (Steuerfunktion "Heben" bzw. "Aufneigen" **12**). Zum Schließen der Plattform in ihre vertikale Fahrtstellung (**Fig. 3d**) wird der Steuerhebel 9a nach oben und der Steuerhebel 9b nach unten betätigt (Steuerfunktion "Schließen" **13**). Um die Steuerfunktion "gleichzeitiges Öffnen und Senken" **14** auszulösen (**Fig. 3e**), sind bis zum Öffnungsgrenzwinkel α der Plattform beide Steuerhebel 9a, 9b nach unten zu betätigen. D.h., wenn die Steuerfunktion "Senken" 11 bei Öffnungswinkeln kleiner oder gleich dem Öffnungsgrenzwinkel α betätigt wird, wird die kombinierte Steuerfunktion 14 ausgelöst. Die jeweiligen Betätigungsrichtungen der Steuerhebel 9a, 9b sind in Fig. 3 jeweils durch Pfeile veranschaulicht.

Möchte der Fahrer sein Fahrzeug be- oder entladen, bedient er statt herkömmlich die Steuerfunktion "Öffnen" 10 die Steuerfunktion "Senken" 11. Durch die nachstehend beschriebene elektrische Schaltung wird dadurch die Steuerfunktion "gleichzeitiges Öffnen und Senken" 14 ausgelöst. Diesen Vorgang behält der Fahrer so lange bei, bis die Plattform 3 die waagerechte Arbeitsposition 3/5 erreicht hat. Durch kurzes Unterbrechen der Steuerfunktion 14 geht die kombinierte Steuerfunktion 14 dann in die Steuerfunktion "Senken" 10 über. Der Punkt, wo die Plattform 3 ihre waagerechte Arbeitsposition 3/4 erreicht, ist je nach Hubhöhe (Ladehöhe) unterschiedlich, und der Zeitpunktpunkt hängt auch von den Parametern Öffnungs- und Senkgeschwindigkeit ab. Durch das Loslassen eines der beiden Steuerhebel 9a, 9b wird die Kombinationsfunktion ausgeschaltet. Die weitere Bedienung funktioniert mit den jeweiligen Einzelfunktionen.

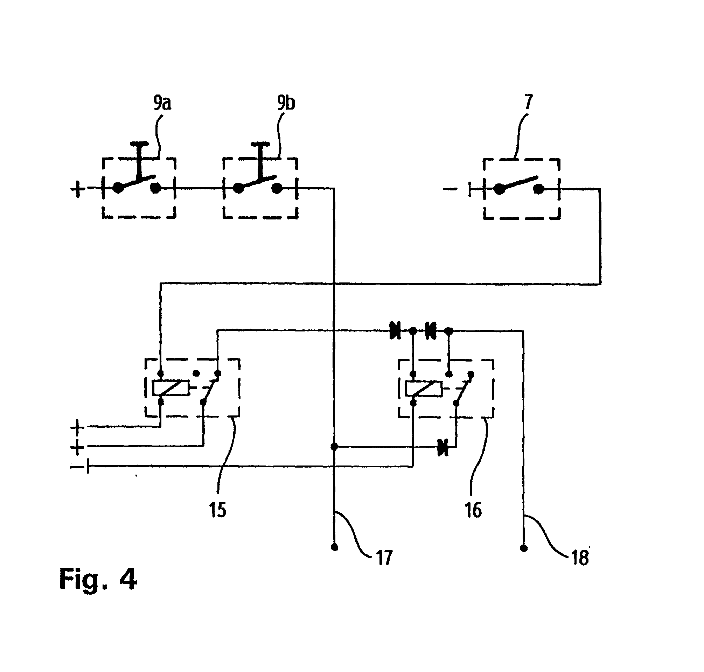

**Fig. 4** zeigt den elektrischen Schaltplan der Steuerung der Hubladebühne, wobei bei den Bedienelementen nur die Steuerfunktionen "Senken" 11 und "gleichzeitiges Öffnen und Senken" 14 dargestellt sind. Nachstehende Funktionsbeschreibung geht davon aus, daß sich die Plattform 3 in ihrer geschlossenen Fahrtposition 3/1 befindet. Bei geschlossener Plattform ist der Neigungssensor 7 geöffnet und somit das erste Relais **15** in Ruhestellung. Dieses Relais **15** schaltet in Ruhestellung Plusspannung zum zweiten Relais **16** durch und damit dieses in Arbeitsstellung. Werden nun die beiden Steuerhebel 9a, 9b betätigt, wird Plusspannung direkt auf die "Senken"- Steuerleitung **17** gegeben und gleichzeitig wird über den geschlossenen Kontakt des zweiten Relais 16 Plusspannung auf die "Öffnen"-Steuerleitung **18** gegeben. Nunmehr senkt und öffnet die Plattform gleichzeitig. Überschreitet die Plattform den Schaltpunkt des Neigungsschalters 7 bei ca. 20°, geht das erste Relais 15 in Arbeitsstellung und das zweite Relais 16 in Ruhestellung. Nun kann beim Betätigen der beiden Steuerhebel 9a, 9b keine Spannung auf die "Öffnen"-Steuerleitung 18 gegeben werden, d.h., es wird nur die Funktion 'Senken' angesteuert. Um bei angewählter Kombinationsfunktion ein Abschalten über den Neigungsschalter 7 zu verhindern, wird das zweite Relais 16 bei angewählter Steuerfunktion "gleichzeitiges Öffnen und Senken" 14 über eine Selbsthaltung permanent in Arbeitsstellung gehalten. Wird die Steuerfunktion 14 z.B. durch Loslassen eines der Steuerhebel 9a, 9b unterbrochen, ist die Selbsthaltung aufgehoben und damit auch die Steuerfunktion 14. Die Hubladebühne kann für die Be- und Entladearbeit in herkömmlicher Weise weiter bedient werden.

## Patentansprüche

1. Steuerung für eine Hubladebühne (1) mit parallelogrammförmigem Hubwerk (2), mit vier Steuerfunktionen zum Öffnen (10) der Plattform (3) der Hubladebühne (1) aus einer vertikalen Fahrtposition (3/1) in eine waagerechte Arbeitsposition (3/3), zum Heben (12) und Senken (11) der waagerechten Plattform (3) sowie zum Schließen (13) der Plattform (3) aus ihrer waagerechten Position (3/3) in die vertikale Fahrtposition (3/1),
**gekennzeichnet durch** eine fünfte Steuerfunktion zum gleichzeitigen Öffnen/Senken (14) der Plattform (3) aus etwa der vertikalen Fahrtposition (3/1) in eine waagerechte Arbeitsposition (3/3), wobei die fünfte Steuerfunktion spätestens mit Erreichen der waagerechten Arbeitsposition (3/3) der Plattform (3) deaktiviert ist.

2. Steuerung nach Anspruch 1, **dadurch gekennzeichnet, daß** die fünfte Steuerfunktion nur bis zu einem Öffnungsgrenzwinkel (α) der Plattform (3) von ca. 45°, vorzugsweise ca. 20°, bezogen auf die vertikale Fahrtstellung (3/1), aktivierbar ist.

3. Steuerung nach Anspruch 2, **dadurch gekennzeichnet, daß** bei Öffnungswinkeln der Plattform (3) größer als der Öffnungsgrenzwinkel (α) die aktivierte fünfte Steuerfunktion durch einen Abbruch oder eine Unterbrechung der fünften Steuerfunktion durch den Bediener deaktiviert ist.

4. Steuerung nach Anspruch 2, **dadurch gekennzeichnet, daß** die aktivierte fünfte Steuerfunktion bei Erreichen der waagerechten Arbeitsposition (3/3) der Plattform (3) automatisch in die Steuerfunktion "Senken" (11) übergeht.

5. Steuerung nach einem der Ansprüche 2 bis 4, **dadurch gekennzeichnet, daß** bis zum Öffnungsgrenzwinkel (α) die fünfte Steuerfunktion durch Betätigen der Steuerfunktion "Senken" (11) auslösbar ist.

6. Steuerung nach einem der vorhergehenden Ansprüche, **dadurch gekennzeichnet, daß** zum Erfassen zumindest des Öffnungsgrenzwinkels (α) der Plattform (3) ein Neigungssensor (7) vorgesehen ist.

7. Steuerung nach Anspruch 6, **dadurch gekennzeichnet, daß** der Neigungssensor (7) an der Plattform (3) vorgesehen ist

8. Steuerung nach einem der vorhergehenden Ansprüche, **dadurch gekennzeichnet, daß** alle Steuerfunktionen (10, 11, 12, 13, 14) der Steuerung mittels einer Zweihandbedieneinheit (8) auslösbar sind.

## Claims

1. Control system for a lifting loading gate (1) with a parallelogram-shaped lifting mechanism (2), with four control functions for opening (10) the platform (3) of the lifting loading gate (1) from a vertical transport position (3/1) into a horizontal working position (3/3), for raising (12) and lowering (11) the horizontal platform (3) and for closing (13) the platform (3) from its horizontal position (3/3) into the vertical transport position (3/1), **characterized by** a fifth control function for the simultaneous opening/lowering (14) of the platform (3) from approximately the vertical transport position (3/1) into a horizontal working position (3/3), the fifth control function being deactivated no later than when the horizontal working position (3/3) of the platform (3) is reached.

2. Control system according to Claim 1, **characterized in that** the fifth control function can be activated only up to an opening limit angle (α) of the platform (3) of about 45°, preferably about 20°, relative to the vertical transport position (3/1).

3. Control system according to Claim 2, **characterized in that**, at opening angles of the platform (3) greater than the opening limit angle (α), the activated fifth control function is deactivated by abortion or interruption of the fifth control function by the operator.

4. Control system according to Claim 2, **characterized in that** there is an automatic transition from the activated fifth control function to the "lowering" control function (11) when the horizontal working position (3/3) of the platform (3) is reached.

5. Control system according to one of Claims 2 to 4, **characterized in that**, up to the opening limit angle (α), the fifth control function can be triggered by actuating the "lowering" control function (11).

6. Control system according to one of the preceding claims, **characterized in that** a tilt sensor (7) is provided to detect at least the opening limit angle (α) of the platform (3).

7. Control system according to Claim 6, **characterized in that** the tilt sensor (7) is provided on the platform (3).

8. Control system according to one of the preceding claims, **characterized in that** all the control functions (10, 11, 12, 13, 14) of the control system can be triggered by means of a two-hand operation unit (8).

## Revendications

1. Système de commande pour une plateforme élévatrice de chargement (1) comportant un mécanisme de levage en forme de parallélogramme (2), comprenant quatre fonctions de commande pour ouvrir (10) le plateau (3) de la plateforme élévatrice de chargement (1) depuis une position verticale de déplacement (3/1) pour venir dans une position horizontale de travail (3/3), pour soulever (12) et abaisser (11) la plateforme horizontale (3) ainsi que pour fermer (13) le plateau (3) en l'amenant de sa position horizontale (1/3) dans une position verticale de déplacement (3/1),
**caractérisé par** une cinquième fonction de commande pour ouvrir/abaisser simultanément (14) le plateau (3) depuis approximativement la position verticale de déplacement (3/1) pour venir dans une position horizontale de travail (3/3), la cinquième fonction de commande étant désactivée au plus tard lorsque la position horizontale de travail (3/3) du plateau (3) est atteinte.

2. Système de commande selon la revendication 1,
**caractérisé en ce que** la cinquième fonction de commande peut être activée uniquement jusqu'à un angle limite d'ouverture (α) du plateau (3) d'environ 45°, de préférence environ 20°, par rapport à la position verticale de déplacement (3/1).

3. Système de commande selon la revendication 2,
**caractérisé en ce que** dans le cas d'angles d'ouvertures du plateau (3) supérieurs à l'angle limite d'ouverture (α), la cinquième fonction de commande activée est désactivée par un arrêt ou une interruption de la cinquième fonction de commande par l'opérateur.

4. Système de commande selon la revendication 2,
**caractérisé en ce qu'**il se produit une commutation automatique depuis la cinquième fonction de commande activée à la fonction de commande "abaissement" (11) lorsque la position de travail horizontale (3/3) du plateau (3) est atteinte.

5. Système de commande selon l'une des revendications 2 à 4, **caractérisé en ce que** jusqu'à l'angle limite d'ouverture (α), la cinquième fonction de commande peut être déclenchée par actionnement de la fonction de commande "abaissement" (11).

6. Système de commande selon l'une des revendications précédentes, **caractérisé en ce qu'**un détecteur d'inclinaison (7) est prévu pour détecter au moins l'angle limite d'ouverture (α) du plateau (3).

7. Système de commande selon la revendication 6,
**caractérisé en ce que** le détecteur d'inclinaison (7) est prévu sur le plateau (3).

8. Système de commande selon l'une des revendications précédentes, **caractérisé en ce que** toutes les fonctions de commande (10, 11, 13, 14) du système de commande peuvent être déclenchées à l'aide d'une unité de commande à deux mains (8).
